# EUROPEAN PATENT SPECIFICATION

(11) **EP 4 169 740 B1**
(45) Date of publication and mention of the grant of the patent: **12.06.2024**
(21) Application number: 22201289.0
(22) Date of filing: 13.10.2022
(51) Int. Cl.: B60C 11/03, B60C 11/13, B60C 11/04

(54) **TIRE**
REIFEN
PNEUMATIQUE

(30) Priority: 22.10.2021 JP 2021172994
(43) Date of publication of application: 26.04.2023
(73) Proprietor: TOYO TIRE CORPORATION, Itami-shi, Hyogo 6640847 (JP)
(72) Inventor: MATSUBARA, Keisuke, Itami-shi, Hyogo 6640847 (JP)
(74) Representative: Müller-Boré & Partner Patentanwälte PartG mbB

(56) References cited:
- EP-A1- 3 686 035
- CN-U- 212 921 026
- US-A- 5 297 604

## Description

### BACKGROUND OF THE INVENTION

### Field of the Invention

The present invention relates to a tire suited to traveling on a road surface which is off road, for example.

### Related Art

Tires for which traveling on a road surface which is off-road is assumed, normally, often form a block pattern in a tread surface by demarcating land portions constituting the tread surface of the tread into a plurality of blocks, by fixedly setting main grooves extending along the tire-circumferential direction, or main grooves, and transverse grooves extending between main grooves and between the main groove and tread ends.

With such a tire, upon travelling on an off-road road surface, a phenomenon called cut chip tends to occur, in which the tread, particularly rubber of end parts of blocks positioned in the shoulder region of the tread in particularly, goes missing, by impact or contact with unevenness of stones, etc. assuming various shapes scattered on the road surface, pointed parts of rocks, etc.

If cut chip occurs in a plurality of blocks, since the ground contact area of the tire decreases, there is concern over the stability and controllability such as traction performance declines. In addition, early wearing of the tread also tends to occur, a result of which there is a problem in that early replacement of the tire becomes necessary by the useful life of the tire shortening.

As a conventional tire in which a block pattern is formed, for example, Patent Document 1 discloses a tire for irregular ground travel having a block pattern row on a shoulder side of the tread, in which a sloping angle relative to the tread surface normal vector is within the range of 5 to 10 degrees at the center side, and is within the range of 10 to 30 degrees at the shoulder side of the groove wall on the treading side of each block constituting the block pattern row, and an angle tapering part in which the sloping angle from the shoulder side towards the center part tapers is formed in the entirety or part of the groove wall.

However, Patent Document 1 merely discloses improving the durability and stability and controllability, in comparatively gentle traveling conditions when defining a floating gravel road surface covering by gravel (rounded stones having constant fineness in grain size) as the running surface. In addition, Patent Document 1, for example, has no disclosure of performance evaluation of a road surface which is off-road under severe travel conditions, as in the case of the stones scattered on the road surface being stones having jagged shape, or a case of travelling on a road where sharp parts of rocks exist, particularly a road surface of a harsh desert race such as a desert area abundant in undulations or a mountainous areas crossing over a rocky area. Additionally, Patent Document 1, no considered is given for suppressing cut chip which tends to occur at the end part of the blocks positioned in the shoulder region of the tread, upon having a vehicle travel on the road surface which is off-road which is under such a severe travel condition.

CN 212 921 026 U discloses a winter backhoe loader tire which comprises a central pattern groove, crown pattern blocks and shoulder pattern blocks, and shoulder longitudinal pattern grooves which are formed between the adjacent crown pattern blocks and shoulder pattern blocks. The shoulder pattern blocks are composed of shoulder large pattern blocks and shoulder small pattern blocks which are alternately arranged in the circumferential direction of the tread in a wide-narrow mode, the shoulder large pattern blocks and the shoulder small pattern blocks are all irregular polygons, and shoulder transverse pattern grooves are formed between the adjacent shoulder large pattern blocks and the shoulder small pattern blocks.

US 5 297 604 A discloses a tread for heavy-duty radial carcass tires, in particular for heavy vehicles intended to travel both on the highway and on different terrains.

EP 3 686 035 A1 discloses a vehicle tire of which tread portion is provided with blocks and being capable of continuously exerting good traction performance on rough terrain.

Patent Document 1: Japanese Unexamined Patent Application, Publication No. 2005-247153

### SUMMARY OF THE INVENTION

An object of the present invention is to provide a tire which can effectively suppress cut-chip which tends to occur at the end part of a shoulder block positioned at the shoulder area of the tread in particular, and can maintain favorable traction performance over a long period, even in the case of travelling on a road surface which is off-road under severe travel conditions, for example. The present invention is defined by the independent claim. Preferred examples are defined in the dependent claims.

The present inventors have found that cut chip which tends to occur at the end part of shoulder blocks can be effectively suppressed in particular, by achieving optimization of the shape of groove corner parts connecting the groove wall and groove bottom of shoulder transverse grooves with the angle of the groove wall of the shoulder transverse groove demarcating the shoulder blocks positioned in the shoulder region of the tread, even in the case of traveling on a road surface which is off-road under severe travel conditions, for example, thereby arriving at completion of the present invention.

More specifically, the tire of the present invention includes a tread including: a shoulder region formed by dividing by a tread end and a shoulder main groove extending along a tire-circumferential direction, wherein a shoulder transverse groove extending from the shoulder main groove towards an outer side in a tire-width direction to the tread end is fixedly set in the shoulder region; and a shoulder block row configured by arranging side-by-side in the tire-circumferential direction a shoulder block divided by the tread end, the shoulder main groove and the shoulder transverse groove, in which viewing the shoulder transverse groove in a tire-circumferential direction cross section, an angle formed by a groove wall and a vertical line drawn from a groove opening end position to a tread surface of the shoulder block is in a range of 10 to 20 degrees, and the groove wall and groove bottom are connected by a concaved surface having a radius of curvature of at least 6 mm and no more than 15 mm.

In the tire of the present invention configured in this way, by the shoulder transverse groove, when viewing in a tire-circumferential direction cross section, has an angle of a groove wall relative to a vertical line drawn from the groove opening end position to the tread surface of the shoulder block set in a range of 10 to 20 degrees, even in the case of traveling on a road surface which is off-road, it is possible to effectively raise the land portion rigidity of the shoulder blocks positioned in the shoulder region of the tread, particularly the end parts of the shoulder blocks.

In addition, in the tire of the present invention, by having groove corners connecting the groove wall and groove bottom, and forming the groove corners in a concaved surface shape with a radius of curvature of at least 6 mm and no more than 15 mm, for example, since the groove corner parts which are junctions between the groove wall of the shoulder transverse groove and groove bottom of the shoulder transverse groove are formed in a smooth concaved surface shape without being squared to become rounded, while securing groove volume of the shoulder transverse groove of an extent which can exhibit traction performance by paddling water, soil, sand, mud, etc., the occurrence and/or progression of rubber cracking due to stress concentration at the groove corner parts hardly arises, a result of which rubber chipping in the shoulder blocks hardly occurs.

As a result thereof, it is possible to effectively suppress cut-chip which tends to occur at the end part of a shoulder block positioned at the shoulder area of the tread in particular, and can maintain favorable traction performance over a long period, even in the case of travelling on a road surface which is off-road under severe travel conditions, for example.

In addition, in the tire of the present invention, a circumferential direction dimension to a tread surface of the shoulder block is at least 2.2 times and no more than 3.8 times a groove depth of the shoulder transverse groove.

It is thereby possible to more reliably raise the land portion rigidity of the end part of blocks, while securing the groove volume of the shoulder transverse groove.

Furthermore, in the tire of the present invention, a groove width of the shoulder transverse groove is preferably at least 15 mm and no more than 30 mm at an opening position, and at least 5 mm and no more than 15 mm at a groove bottom position. Moreover, in the tire of the present invention, the shoulder transverse groove preferably has a groove depth of at least 11 mm.

Since it is thereby possible to sufficiently secure the groove volume of the shoulder transverse groove, it is possible to more reliably realize favorable traction performance.

Additionally, in the tire of the present invention, the shoulder transverse groove preferably has a bump which partially projects at a groove bottom towards a groove opening side.

It is thereby possible to much better maintain favorable traction performance over a long period, by preventing foreign materials such as mud and stones from clogging up the shoulder transverse grooves.

In addition, in the tire of the present invention, the tread preferably includes a center region demarcated and formed by the pair of shoulder main grooves, wherein a center main groove extending along a tire-circumferential direction is fixedly set in the center region; and two center block rows configured by arranging side-by-side in the tire-circumferential direction a plurality of center blocks divided by configuring the center main groove and the pair of shoulder main grooves in an extended form of substantially zigzag shape connecting to each other.

It is thereby possible to sufficiently realize favorable traction performance across normal paved roads and every running road surface of off-road surfaces which are not paved.

According to the present invention, it is possible to provide a tire which can effectively suppress cut-chip which tends to occur at the end part of a shoulder block positioned at the shoulder area of the tread in particular, and can maintain favorable traction performance over a long period, even in the case of travelling on a road surface which is off-road under severe travel conditions, for example.

### BRIEF DESCRIPTION OF THE DRAWINGS

FIG. 1 is an expansion drawing of a portion of a tire according to an embodiment of the present invention from the tread until (part of) sidewalls;
FIG. 2 is a width-direction half section of the tire shown in FIG. 1;
FIG. 3 is a cross-sectional view along the line I-I shown in FIG. 1;
FIG. 4 is a photograph when capturing in actual size the state of the tread of a tire of Example A after traveling on a test course simulating the road surface of severe off-road; and
FIG. 5 is a photograph when capturing in actual size the state of the tread of a tire of Comparative Example A after traveling on a test course simulating the road surface of severe off-road.

### DETAILED DESCRIPTION OF THE INVENTION

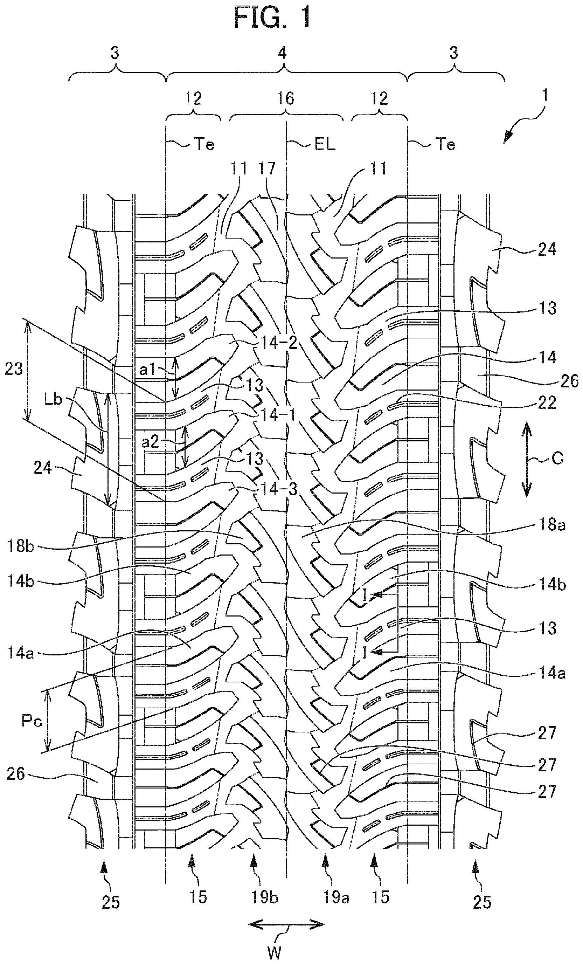

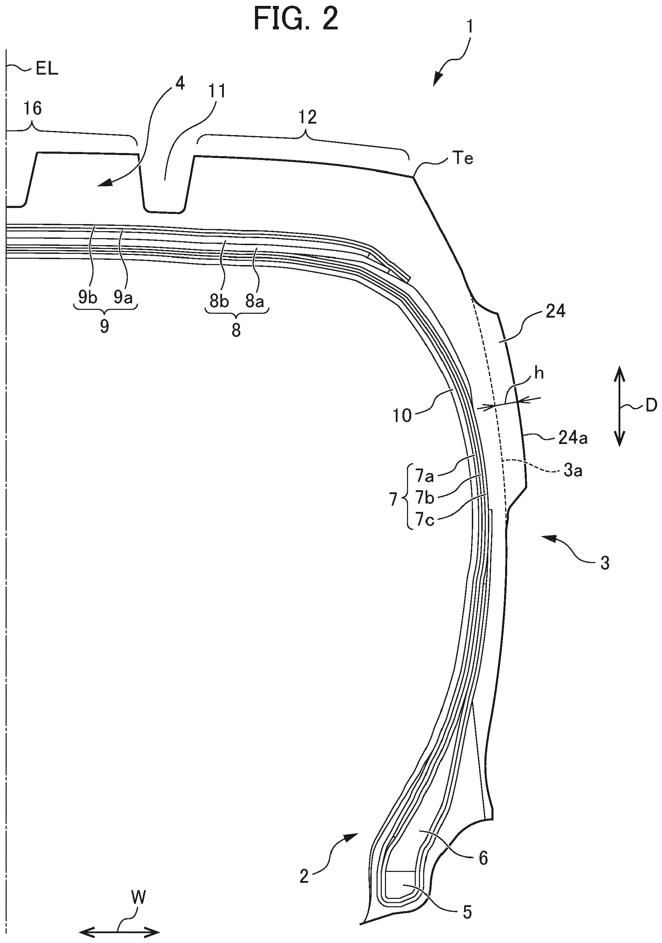

Next, an embodiment of a tire according to the present invention will be explained below while referencing the drawings. FIG. 1 is an expansion drawing of a portion of a tire according to an embodiment of the present invention from the tread until (part of) sidewalls, and FIG. 2 is a width-direction half section of the tire shown in FIG. 1. It should be noted that, in FIG. 2, the hatching of the cross section is omitted to facilitate understanding the cross-sectional structure.

The tire 1 of the present invention is a pneumatic tire (hereinafter may be referred to simply as "tire") which can be favorably used in a vehicle for which travelling not only on paved roads, but also on a road surface which is off-road is assumed. However, the tire 1 of the present invention is not limited only to such a situation or use. It should be noted that "road surface which is off-road" referred to herein indicates a road surface including every location of terrain to which the vehicle can enter such as grassy, gravely, sandy or muddy areas which are unpaved, for example.

As shown in FIG. 2, the tire 1 of the present embodiment includes: a pair of beads 2 (illustration of only one bead), a pair of sidewalls 3 (illustration of only one sidewall) extending from each of this pair of beads 2 to outwards in the tire-radial direction, and a tread 4 (illustration of only half) stretching to both of the outer ends in the tire-radial direction of this pair of sidewalls 3. The bead 2 includes an annular bead core 5 made by rubber coating a steel cord or the like; and a bead filler 6 arranged at the outer side in the tire-radial direction of the bead core 5.

In addition, the tire 1 includes: a carcass 7 engaged with the pair of bead cores 5 and extending in a toroid shape as a whole; a belt 8 and reinforcement belt 9 provided between the tread 4 and outer circumference of the carcass 7; and an inner liner 10 provided at the inner surface side of the carcass 7 for air pressure retention.

A case is shown of the carcass 7, being configured by at least one carcass ply, for example, in FIG. 1, the two carcass plies 7a, 7c, which are turned-up plies lifted up by configuring so as to sandwich the bead core 5 and bead filler 6; and one carcass ply 7b which is a down ply positioned between these carcass plies 7a, 7c, and having a width dimension in which both end parts do not reach the bead core 5. These carcass plies 7a to 7c are configured by carcass cords arranged at angles of 75 to 90 degrees relative to the tire circumferential direction C, for example.

The belt 8 is fixedly arranged between the tread 4 and outer circumference of the carcass 7 to reinforce the carcass 7. The belt 8 is configured from at least two belt plies fixedly arranged by laminating so that belt cords of steel, organic fiber of the like become an oblique arrangement, and from the two belt plies 8a and 8b in the present embodiment. The belt plies 8a and 8b are desirably fixedly arranged by laminating in a positional relationship such that the belt cords are arranged with slopes at different orientations from each other relative to the tire-circumferential direction C. With the tire of the present embodiment, the belt cords of the belt plies 8a, 8b are preferably obliquely arranged at angles of 10 to 45 degrees relative to the tire-circumferential direction C.

In addition, with the tire of the present embodiment, the reinforcement belt 9 arranged so as to cover part or the entirety of the outer surface of the belt 8 is fixedly arranged. The reinforcement belt 9 is a ply with cord rubber arranging cords substantially in parallel (0 to 5 degrees) relative to the tire-circumferential direction. Although the tire of the present embodiment shows a case in which the reinforcement belt 9 is configured by the two layers of double-width reinforcing plies 9a, 9b fixedly arranged so as to cover the entirety of the outer surface of the belt 8, it may be configured by one layer or three or more layers of double-width reinforcing plies. In addition, the reinforcing belt 9 may be configured by a pair of narrow-width reinforcement plies (not illustrated) covering only both end parts of the belt, and further, can be configured by combining both the double-width reinforcing ply and pair of narrow-width reinforcing plies.

The tread 4 includes a pair of shoulder regions 12, 12 formed by dividing by a pair of tread ends Te, Te and a pair of shoulder main grooves 11, 11, as shown in FIG. 1. The pair of shoulder main grooves 11, 11 is fixedly arranged to be spaced apart sandwiching a tire equatorial plane EL, and extends along the tire-circumferential direction C.

In addition, in each shoulder region 12, a plurality of shoulder transverse grooves 13, 13, ... extending from the shoulder main groove 11 towards the outer side in the tire-width direction W to the tread end Te is fixedly arranged, and includes a shoulder block row 15 configured by aligning in the tire-circumferential direction C the plurality of shoulder blocks 14, 14, ... demarcated by the tread end Te, shoulder main groove 11 and plurality of shoulder transverse grooves 13, 13. Herein, the tire 1 of the embodiment shown in FIG. 1 shows a case in which the shoulder block row 15 is made by configuring two types of shoulder blocks 14a, 14b having different sizes on the block tread surface to be alternately side-by-side in the tire-circumferential direction C. In this tire 1, the tire-width direction outer end of the first shoulder block 14a is at the same position as the tread end Te, and the tire-width direction outer end of a second shoulder block 14b is located more to the inner side in the tire-width direction W than the tire-width direction outer end of the first shoulder block 14a. It should be noted that the tire of the present invention is not limited to only such a configuration, and can be configuring the plurality of shoulder blocks constituting the shoulder block row 15 by only one type of shoulder block having the same size of block tread surface, or may be configured by three types of shoulder blocks having different sizes of block tread surface.

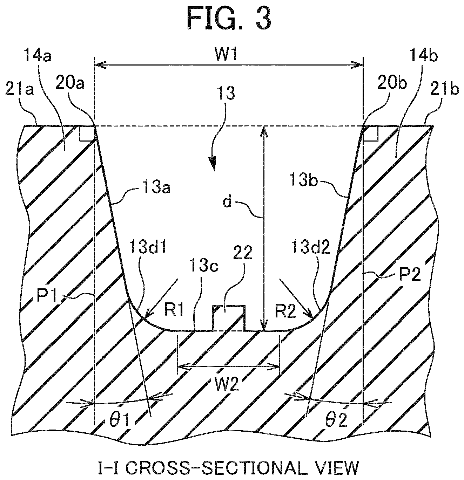

In the present invention, viewing the shoulder transverse groove 13 in a tire-circumferential direction cross section (cross-sectional view along line I-I shown in FIG. 1) such as that shown in FIG. 3, it is necessary for the angles Θ1, Θ2 of the groove wall 13a, 13b relative to the perpendicular lines P1, P2 drawn to the tread surface 21a, 21b of the shoulder blocks 14a, 14b from each of the groove opening end positions 20a, 20b to both be in the range of 10 to 20 degrees. In addition, in the present invention, the shoulder transverse groove 13 has groove corner parts 13d1, 13d2 linking each of the grooves walls 13a, 13d of the shoulder transverse groove 13 and the groove bottom 13c, in which the groove corner parts 13d1, 13d2 are formed in a concaved surface shape with a radius of curvature of at least 6 mm and no more than 15 mm. In other words, each of the groove parts 13a, 13b and the groove bottom 13c of the shoulder transverse groove 13 are linked by a concaved surface having a radius of curvature of at least 6 mm and no more than 15 mm. It should be noted that the groove opening end positions 20a, 20b are clear so long as the corners linking the tread surfaces 21a, 21b of the shoulder blocks 14a, 14b and the groove walls 13a, 13b of the shoulder transverse groove 13 have a vertex (intersecting point) as shown in FIG. 3. However, the groove opening end positions 20a, 20b may also be formed in a curved shape without the corner having a vertex. For this reason, in such a case, the groove opening end positions 20a, 20b establish an intersection position of extension lines drawn from the tread surface 21a, 21b of the shoulder blocks 14a, 14b, and the extension line drawn from the groove walls 13a, 13b of the shoulder transverse groove 13. In addition, "the perpendicular lines P1, P2 drawn to the tread surface 21a, 21b of the shoulder blocks 14a, 14b from each of the groove opening end positions 20a, 20b" shall be rewritten as "perpendicular lines intersecting extension line drawn from each of the intersection positions to the tread surfaces 21a, 21b of the shoulder blocks 14a, 14b".

In the tire 1 of the present embodiment, if establishing the shoulder transverse groove 13 in which the angles Θ1, Θ2 of the groove walls 13a, 13b are both in the range of 10 to 20 degrees, in other words, even in a case of traveling on a road surface which is off-road by establishing the angle formed by the road surface of the shoulder block 14 and both side walls (same parts as groove walls 13a, 13b) as 100 to 110 degrees, it is possible to effectively raise the land portion rigidity of the shoulder blocks 14 positioned in the shoulder region 12 of the tread 4, particularly the end parts of (both the treading side and kick-out side during tire ground contact of) the shoulder blocks 14. If the angles Θ1, Θ2 of the groove walls 13a, 13b are less than 10 degrees, it is not possible to sufficiently raise the land portion rigidity of the shoulder block 14. In addition, if the angles θ1, θ2 of the groove walls 13a, 13b are greater than 20 degrees, although it is possible to raise the land portion rigidity of the shoulder block 14, since the reduction ratio of the groove volume of the shoulder transverse groove 13 increases, on a road surface which is off-road such as sandy soil or muddy soil, the force paddling water, soil, sand, mud, etc. by the shoulder transverse groove 13 weakens, a result of which sufficient traction performance (surmountability) is no longer obtained.

In addition, the shoulder transverse groove 13 can secure the groove volume of the shoulder transverse groove 13 of an extent which can exhibit traction performance by paddling water, soil, sand, mud, etc., by the groove corner parts 13d1, 13d2 being formed in a concaved surface shape with radius of curvature R1, R2 of at least 6 mm and no more than 15 mm, for example. In addition, the groove corner parts 13d1, 13d2 which are junctions between the groove walls 13a, 13b of the shoulder transverse groove 13 and groove bottom 13c of the shoulder transverse grooves 13, 13 are formed in a smooth concaved surface shape without being squared to become rounded; therefore, the occurrence and/or progression of rubber cracking due to stress concentration at the groove corner parts 13d1, 13d2 hardly arises, a result of which cut-chip in the shoulder block 14 hardly occurs. If the radius of curvature R1, R2 of the groove corner parts 13d1, 13d2 is smaller than 6 mm, it is no longer possible to sufficiently suppress the occurrence of rubber cracking at the groove corner parts 13d1, 13d2, etc. In addition, if the radius of curvature R1, R2 of the groove corner parts 13d1, 13d2 is greater than 15 mm, the area of the flat groove bottom 13c of the shoulder transverse groove 13 can no longer be sufficiently secured, and if the area ratio of the flat groove bottom 13c is small, stress tends to concentrate, a result of which cracks tend to occur.

For this reason, with the tire 1 of the present embodiment, the shoulder transverse groove 13 has the groove corner parts 13d1, 13d2 having the angle θ1, θ2 of the groove walls 13a, 13b relative to the vertical lines P1, P2 drawn from the groove opening end positions 20a, 20b to the tread surfaces 21a, 21b of the shoulder blocks 14a, 14b in a range of 10 to 20 degrees, and linking the groove walls 13a, 13b and groove bottom 13c, and even in a case of traveling on a road surface which is off-road, for example, by the groove corner parts 13d1, 13d2 being formed in a concaved surface shape with a radius of curvature R1, R2 of at least 6 mm and no more than 15 mm, it is possible to effectively suppress cut chip which tends to occur particularly at the end parts of the shoulder block 14, and possible to maintain favorable traction performance over a long period.

In addition, in the tire of the present embodiment, the circumferential direction dimensions a1, a2 at the tread surfaces 21a, 21b of the shoulder blocks 14a, 14b are at least 2.2 times and no more than 3.8 times the groove depth d of the shoulder transverse groove 13. It is thereby possible to raise the land portion rigidity of the end part of the should blocks 14a, 14b with good balance, while securing the groove volume of the shoulder transverse groove 13. The tread surface shapes of the shoulder blocks 14a, 14b can be exemplified as various shapes such as rectangular or parallel quadrilateral; however, there is no particular limitation. In addition, the circumferential direction dimensions a1, a2 of the shoulder blocks 14a, 14b are measured at the position moved from the outer end position located at the tread end Te side of the shoulder block 14 to the tire equatorial plane EL side by 3 mm in the tire-width direction W.

Furthermore, in the tire of the present embodiment, the shoulder transverse groove 13 preferably has a groove width w1 at the opening position 20a of at least 15 mm and no more than 30 mm, and a groove width w2 at the groove bottom position 13c of at least 5 mm and no more than 15 mm. Furthermore, in the tire of the present embodiment, the shoulder transverse groove 13 preferably has a groove depth d of at least 11 mm. By adopting these configurations, since it is possible to effectively secure the groove volume of the shoulder transverse groove 13, it is possible to more reliably realize the effectiveness of favorable traction performance. It should be noted that the groove width of the shoulder transverse groove 13 is measured using a normal ruler, at both the opening position 20a and groove bottom position 13c.

Additionally, in the tire 1 of the present embodiment, the shoulder transverse groove 13 preferably has a bump 22 partly projecting towards the groove opening 20a, 20b side at the groove bottom 13c. It is thereby possible to much better maintain favorable traction performance over a long period, by preventing foreign materials such as mud and stones from clogging up the shoulder transverse grooves 13. The bump 22 is sufficient so long as provided so as to extend continuously or discontinuously (FIG. 1) along the extending direction of the shoulder transverse groove 13 in the width central position of the groove bottom 13c.
In addition, the groove cross-sectional shape of the bump 22 is shown by FIG. 3 for the case of rectangular; however, various shapes such as circular, oval and triangular can be exemplified, and there are no particular limitations.

In addition, in the tire 1 of the present embodiment, the tread 4 includes a center region 16 formed by dividing by the pair of shoulder main grooves 11, 11. Then, a case is shown of fixedly arranging the center main groove 17 extending along the tire-circumferential direction C in the center region 16, and configuring so as to include, on both sides of the tire equatorial plane EL, two center block rows 19a, 19b configured by aligning in the tire-circumferential direction C each of a plurality of center blocks 18a, 18a, .., and a plurality of center blocks 18b, 18b, .., divided by establishing the center main groove 17 and pair of shoulder main grooves 11, 11 in a substantially zig-zag shape connecting with each other.

Additionally, the tire 1 of the present embodiment has a tread pattern forming the shoulder blocks 14, 14 respectively positioned in different shoulder block rows 15, 15, and the center blocks 18a, 18b respectively positioned in different center block rows 19a, 19b so as to make a point-symmetric pattern.

The tire having such a tread pattern is a favorable tire to be used without limiting the wheel (left/right wheel) mounting the tire relative to the vehicle; however, it may be a tread pattern which is line symmetrical relative to the tire equatorial plane as in the tire in the case of limiting the wheel mounting the tire relative to the vehicle, or alternatively, it is possible to form in a pattern differentiating the tread pattern positioned at both sides of the tire equatorial plane EL without being symmetrical, and is not particularly limited.

It should be noted that the tire of the present embodiment is not limited to only such a configuration for the center blocks 18a, 18b positioned in the center region 16, and is sufficient so long as having a shape which can exhibit stability and controllability including traction performance on a road surface which is off-road.

Furthermore, the tire of the present embodiment preferably includes the side block row 25 configured by a plurality of side blocks 24, 24, ... protruding from the outer surface of the sidewall 3 outwards along the tire-circumferential direction C on the outer surface of the sidewall 3, as shown in FIGS. 1 and 2.

In addition, the side blocks 24 are preferably fixedly arranged side-by-side in the tire-circumferential direction C in a positional relationship corresponding to each circumferential-direction range 23 in which two shoulder transverse grooves 13, 13 dividing one shoulder block 14 (14-1) and one shoulder block 14 (14-1) exist, in at least one shoulder region among the pair of shoulder regions, and in the outer surface of the sidewall 3 positioned on the side of both shoulder regions 12, 12 in FIG. 1, and preferably has a circumferential-direction dimension Lb of at least the circumferential-direction range 23.

By adopting this configuration, in the case of traveling on a soft road surface, since the tire sinks in according to the weight of the vehicle, the side block rows 25 positioned at the sidewalls of the tire also come to pseudo-ground contact. For this reason, it is possible to improve sufficient traction performance (surmountability) particularly on a road surface which is off-road, as a result of the force paddling water, soil, sand, mud, etc. improving by the recess groove 26 positioned between the side blocks 24, 24, ... In addition, by adopting the above-mentioned configuration, obstructions such as the pointed parts of rocks having the possibility of colliding or contacting with the outer surface of the tire from the tire side tend to contact with the side blocks 24, and thus collision and contact with the end part of the shoulder block 14 (14-1) hardly occurs. As a result thereof, it is possible to much more suppress cut chip which tends to occur at the end part of the shoulder block 14.

It should be noted that FIG. 1 illustrates the relative positional relationship in the tire-circumferential direction C between the shoulder blocks 14 and side blocks 24 of the sidewall 3; therefore, among the shoulder blocks 14 of the tread 4, the reference numbers of 14-1, 14-2, 14-3 are also jointly noted with the three shoulder blocks 14 arranged side-by-side in the tire-circumferential direction C for convenience of explanation. At this time, the side blocks 24 are preferably fixedly arranged to correspond to the circumferential-direction range over the total of three shoulder blocks 14-1, 14-2, 14-3 of the one shoulder block 14-1 and the two shoulder blocks 14-2, 14-3 positioned at both sides in the tire-circumferential direction of the one shoulder block 14-1.

By adopting this configuration, the two shoulder transverse grooves 13, 13 dividing (both end parts of) the one shoulder block 14-1 hardly receive damage by the pointed parts of rocks and rocks having a jagged shape scattered on the road surface from the side face of the tire; therefore, it is possible to much more suppress cut chip. In this case, the side block 24 more favorably has the circumferential-direction overlapping dimension of the two shoulder blocks 14-2, 14-3 in the range of at least 5% and no more than 20% relative to the circumferential direction dimension a1 of the shoulder blocks 14-2, 14-3.

The side block 24 protruding towards the outer side in the tire-width direction preferably has a maximum height dimension h in the range of at least 4 mm and no more than 15 mm. By adopting this configuration, it is possible to effectively improve the cut chip property, while utmost suppressing the weight increase of the tire.

It should be noted that the maximum height dimension h of the side block 24 is the maximum value of the dimension when measuring the vertical dimension from the outer surface 3a of the sidewall 3 along the profile line of the tire T until the outer surface 24a of the side block.

In addition, with the tire 1 of the present embodiment, by such a plurality of side blocks 24, 24, ... being provided, it is possible to improve the rough road running ability by exhibiting traction effects from the shearing resistance of the side blocks 24, in the setting of traveling on a bad road of muddy ground or a rocky area. In addition, by the side blocks 24 being provided, it exhibits a protection effect of keeping external injury factors such as the jagged portions of bare rocks from the outer surface 3a of the sidewall 3, and the external wound resistance to the side face of the tire 1 can also be improved.

Each of the aforementioned dimension values is measured in an unloaded normal state mounting the tire to a standard rim and filling with standard internal pressure. Regular rim is a rim for which the standard is decided for every tire, in a specification system including the standard on which the tire is based, and indicates a "standard rim" if JATMA, "Design Rim" if TRA, and "Measuring Rim" if ETRTO. In addition, regular internal pressure is the air pressure decided by each standard for every tire in the specification system including the standard on which the tire is based, and indicates "maximum air pressure" if JATMA, the maximum value described in "TIRE LOAD LIMITS AT VARIOUS COLD INFLATION PRESSURES" if TRA, and "INFLATION PRESSURE" if ETRTO.

The tire according to the present invention can be configured identically to a normal pneumatic tire, other than configuring the shoulder region 12 of the tread 4 in the aforementioned way. Therefore, conventionally known materials, shapes, structures, manufacturing methods, etc. all can be applied to the tire of the present invention.

Although an embodiment of the present invention has been explained above, the present invention is not to be limited to the above-mentioned embodiment. For example, for the reason of a reduction in pattern noise, etc., the tire 1 shown in FIG. 1 shows a case of forming in a tread pattern having so-called pitch variation, fixedly setting the shoulder blocks 14a, 14b by varying in the tire-circumferential direction C the arrangement pitch Pc of shoulder blocks 14a, 14b fixedly set in the tire-circumferential direction C; however, it is not limited to this configuration, and various forms may be considered. In addition, the tire shown in FIG. 1 shows a case of fixedly setting sipes and fine grooves 27 (FIG. 1), at the tread surfaces of the shoulder blocks 14a, 14b and the center blocks 18a, 18b, and the surface of the side blocks 24, for reason such as exhibiting an edge effect; however, such a configuration can be appropriately arranged as necessary, and the number of arrangements can be increased.

### EXAMPLES

Next, in order to further clarify the effects of the present invention, Examples and Comparative Examples will be explained; however, the present invention is not to be limited to these examples.

### (Examples 1 to 3, Comparative Examples 1 to 5)

The tires of Examples 1 to 3 and Comparative Examples 1 to 5 were prototyped based on the specifications in Table 1 with the size of LT285/70R17, without conducting pitch variation in either shoulder region, and having the same tread pattern as the tread pattern shown in FIG. 1 and having the tire half section shown in FIG. 2, other hand fixedly arranging only one type of shoulder block 14a in a constant pitch along the tire-circumferential direction. It should be noted that each trial sample tire has substantially the same tire structure, other than the configuration of the shoulder region of the tread. For the vehicle to which each sample tire was mounted, a road surface which was off-road of the conditions shown below was traveled, and the traction performance and anti-cut chip performance were evaluated. The evaluation methods were as follows.

### <Traction Performance>

Traction performance was evaluated at the travel initial stage and after traveling 50 km, according to the feeling from a professional driver by driving a vehicle to which each sample tires were mounted under the conditions listed below, around at an average speed of 60 km/h until the travel distance reached 50 km, on a test course created to simulate a road surface of a harsh desert race such as a desert area abundant in undulations or mountainous area crossing over a rocky area, more specifically a test course of dry dirty in which a road surface with rugged rocks, road surface with ups and downs, road surface causing travel conditions such as sudden braking and sudden turning, etc. exist. The evaluation results are shown in Table 1, defining a case of the feeling being good as "O" with the traction performance being superior, and defining a case of the feeling being poor as "X" with the traction performance deteriorating. Rim size: 17x7.5 Tire internal pressure: 200 kPa
Vehicle: Toyota Landcruiser with 4608 cc engine displacement
Tire-mounting wheel(s): all wheels

### <Anti-cut chip performance>

The tire after performing testing of the above-mentioned traction performance was observed by visually inspecting the state of the tire outer surface including the tread, and it was determined whether damage such as chipping in the end part of the shoulder block occurred. The evaluation results thereof are shown in Table 1, defining a case of no occurrence of damage such as chipping as "O" with the anti-cut chip being superior, defining a case of damage such as chipping as "Δ" with the anti-cut chip performance being somewhat deteriorating, and defining a case of damage such as chipping remarkably occurring as "X" with the anti-cut chip performance being very deteriorated.

**[Table 1]**

| | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| Shoulder transverse groove 13 | Groove depth d (mm) | 14.5 | 14.5 | 14.5 | 14.5 | 14.5 | 15.2 | 15.2 | 15.2 |
| | Groove width w1 (Opening position) (mm) | 23.6 | 23.6 | 23.6 | 17.1 | 20.4 | 23.6 | 28.2 | 33.0 |
| | Groove width w2 (Groove bottom position) (mm) | 8.4 | 8.4 | 8.4 | 8.1 | 10.5 | 12.6 | 15.7 | 18.7 |
| | Groove wall angle *θ*1 (Angle) | 10.0 | 10.0 | 20.0 | 5.0 | 5.0 | 14.5 | 17.5 | 19.5 |
| | Groove wall angle *θ*2 (Angle) | 10.0 | 10.0 | 20.0 | 5.0 | 5.0 | 14.5 | 17.5 | 19.5 |
| | Radius of curvature R1 of groove corner 13d1 (mm) | 6.0 | 15.0 | 6.0 | 3.5 | 4.0 | 2.0 | 2.0 | 2.5 |
| | Radius of curvature R1 of groove corner 13d2 (mm) | 6.0 | 15.0 | 6.0 | 3.5 | 4.0 | 2.0 | 2.0 | 2.5 |
| Shoulder block 14 | Circumferential-direction dimension (mm) | 35.7 | 35.7 | 35.7 | 25.7 | 30.7 | 35.7 | 42.5 | 49.3 |
| Performance evaluation | Traction performance | ○ | ○ | ○ | × | × | × | × | × |
| | Anti-cut chip performance | ○ | ○ | ○ | × | Δ | Δ | Δ | Δ |

From the evaluation results of Table 1, the tires of Examples 1 to 3 in which the angles Θ1, Θ2 of the shoulder groove wall and the radius of curvatures R1, R2 of the groove corners were within the suitable ranges of the present invention were found to have both superior traction performance and anti-cut chip performance. On the other hands, the tires of Comparative Examples 1 to 5 in which the angles Θ1, Θ2 of the shoulder groove wall and the radius of curvatures R1, R2 of the groove corners were outside the suitable ranges of the present invention were found to have both inferior traction performance and anti-cut chip performance.

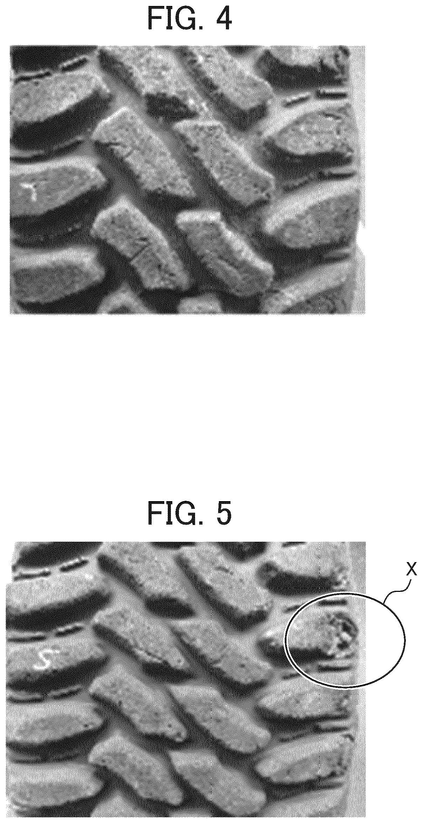

In addition, FIG. 4 is a photograph of the tire of Example A in which the angles Θ1, Θ2 of the shoulder groove wall were both 10 degrees, and the radius of curvatures R1, R2 of the groove corners were both 6 mm, which are all within the suitable ranges of the present invention, when photographing in actual size the state of the tread after travelling 50 km on a road surface of the above-mentioned test course of dry dirt. On the other hand, FIG. 5 is a photograph of the tire of Comparative Example A in which the angles Θ1, Θ2 of the shoulder groove wall were both 5 degrees, and the radius of curvatures R1, R2 of the groove corners were both 3.5 mm, which are all outside the suitable ranges of the present invention, when photographing in actual size the state of the tread for the conventional tire after travelling 50 km on a road surface of the above-mentioned test course of dry dirt.

Based on FIGS. 4 and 5, although a certain extent of abrasion occurred at the end part of the shoulder blocks of the tread for the tire of Example A after travelling 50 km on a road surface of a test course of dry dirt, the occurrence of cut chip was not recognized; whereas, with the tire of Comparative Example A, the occurrence of cut chip was recognized at the end part of the shoulder blocks of the tread (region surrounded by ellipse X in FIG. 5).

### EXPLANATION OF REFERENCE NUMERALS

1 tire (pneumatic tire)
2 bead
3 sidewall
4 tread
5 bead core
6 bead filler
7 carcass
8 belt
9 reinforcement belt
10 inner liner
11 shoulder main groove
12 shoulder region
13 shoulder transverse groove
13a, 13b groove wall of shoulder transverse groove
13c groove bottom of shoulder transverse groove
13d1, 13d2 groove corner of shoulder transverse groove
14 shoulder block
15 should block row
16 center region
17 center main groove
18a, 18d center block
19a, 19b center block row
20a, 20b groove opening end position of shoulder transverse groove
21a, 21b tread surface of shoulder block
22 bump
23 circumferential-direction range
24 side block
25 side block row
26 recess groove
27 fine groove
C tire-circumferential direction
D tire-radial direction
D groove depth of shoulder transverse groove
EL tire equatorial plane
h maximum height dimension of side block
Lb circumferential-direction dimension of side block
P1, P2 vertical line drawn to shoulder block tread surface
R1, R2 radius of curvature of groove corner
Te tread end
W tire-width direction
w1 groove width of shoulder transverse groove (opening position)
w2 groove width of shoulder transverse groove (groove bottom position)
Θ1, Θ2 angle of groove wall

## Claims

1. A tire (1) comprising a tread (4) including: a shoulder region (12) demarcated and formed by a tread end (Te) and a shoulder main groove (11) extending along a tire-circumferential direction (C), wherein a shoulder transverse groove (13) extending from the shoulder main groove (11) towards an outer side in a tire-width direction to the tread end (Te) is fixedly set in the shoulder region (12); and a shoulder block row (15) configured by arranging side-by-side in the tire-circumferential direction (C) a shoulder block (14) divided by the tread end (Te), the shoulder main groove (11) and the shoulder transverse groove (13),
wherein viewing the shoulder transverse groove (13) in a tire-circumferential direction cross section,
an angle (θ1) formed by a groove wall (13a) and a vertical line (P) drawn from a groove opening end position (20a) to a tread surface (21a) of the shoulder block (14) is in a range of 10 to 20 degrees, and the groove wall (13a) and groove bottom (13c) are connected by a concaved surface having a radius of curvature (R1) of at least 6 mm and no more than 15 mm, **characterized in that**
a circumferential direction dimension (a1) to a tread surface (21a) of the shoulder block (14) is at least 2.2 times and no more than 3.8 times a groove depth of the shoulder transverse groove (13).

2. The tire (1) according to claim 1, wherein a groove width of the shoulder transverse groove (13) is at least 15 mm and no more than 30 mm at an opening position, and at least 5 mm and no more than 15 mm at a groove bottom position (13c).

3. The tire (1) according to claim 1 or 2, wherein the shoulder transverse groove (13) has a groove depth of at least 11 mm.

4. The tire (1) according to any one of claims 1 to 3, wherein the shoulder transverse groove (13) has a bump (22) which partially projects at a groove bottom (13c) towards a groove opening side.

5. The tire (1) according to any one of claims 1 to 4, wherein the tread (4) includes a center region (16) demarcated and formed by the pair of shoulder main grooves (11), wherein a center main groove (17) extending along the tire-circumferential direction (C) is fixedly set in the center region (16); and two center block rows (19a, 19b) configured by arranging side-by-side in the tire-circumferential direction (C) a plurality of center blocks (18a, 18b) divided, by configuring the center main groove (17) and the pair of shoulder main grooves (11) in an extended form of substantially zigzag shape connecting to each other.

## Patentansprüche

1. Reifen (1), umfassend eine Lauffläche (4), welche aufweist: einen Schulterbereich (12), der durch ein Laufflächenende (Te) und eine Schulterhauptrille (11), die sich entlang einer Reifenumfangsrichtung (C) erstreckt, abgegrenzt und gebildet ist, wobei eine Schulterquerrille (13), die sich von der Schulterhauptrille (11) zu einer Außenseite in einer Reifenbreitenrichtung zu dem Laufflächenende (Te) erstreckt, fest in dem Schulterbereich (12) eingesetzt ist; und eine Schulterblockreihe (15), die dadurch konfiguriert wird, dass ein Schulterblock (14), welcher durch das Laufflächenende (Te) geteilt wird, die Schulterhauptrille (11) und die Schulterquerrille (13) nebeneinander in der Reifenumfangsrichtung (C) angeordnet wird,
wobei, beim Betrachten der Schulterquerrille (13) in einem Querschnitt in der Reifenumfangsrichtung, ein Winkel (91), der durch eine Rillenwand (13a) und eine vertikale Linie (P) gebildet wird, die von einer Rillenöffnungsendposition (20a) zu einer Laufflächenoberfläche (21a) des Schulterblocks (14) gezogen wird, in einem Bereich von 10 bis 20 Grad liegt, und die Rillenwand (13a) und der Rillenboden (13c) durch eine konkave Fläche mit einem Krümmungsradius (R1) von zumindest 6 mm und nicht mehr als 15 mm verbunden sind,
**dadurch gekennzeichnet, dass**
eine Abmessung in Umfangsrichtung (a1) zu einer Laufflächenoberfläche (21a) des Schulterblocks (14) zumindest das 2,2-fache und nicht mehr als das 3,8-fache einer Rillentiefe der Schulterquerrille (13) beträgt.

2. Reifen (1) nach Anspruch 1, wobei die Rillenbreite der Schulterquerrille (13) zumindest 15 mm und nicht mehr als 30 mm an einer Öffnungsposition und zumindest 5 mm und nicht mehr als 15 mm an einer Rillenbodenposition (13c) beträgt.

3. Reifen (1) nach Anspruch 1 oder 2, wobei die Schulterquerrille (13) eine Rillentiefe von zumindest 11 mm aufweist.

4. Reifen (1) nach einem der Ansprüche 1 bis 3, wobei die Schulterquerrille (13) eine Unebenheit (22) aufweist, die teilweise an einem Rillenboden (13c) in Richtung einer Rillenöffnungsseite vorsteht.

5. Reifen (1) nach einem der Ansprüche 1 bis 4, wobei die Lauffläche (4) einen Mittelbereich (16), der durch das Paar Schulterhauptrillen (11) abgegrenzt und gebildet ist, wobei eine Mittelhauptrille (17), die sich entlang der Reifenumfangsrichtung (C) erstreckt, fest in dem Mittelbereich (16) eingesetzt ist; und zwei Mittelblockreihen (19a, 19b) aufweist, die derart konfiguriert sind, dass sie nebeneinander in der Reifenumfangsrichtung (C) eine Vielzahl von Mittelblöcken (18a, 18b) anordnen, die durch Konfigurieren der Mittelhauptrille (17) und des Paares Schulterhauptrillen (11) in einer verlängerten Form von im Wesentlichen einer Zickzack-Form geteilt sind, die miteinander verbunden sind.

## Revendications

1. Pneu (1) comprenant une bande de roulement (4) incluant : une région d'épaulement (12) délimitée et formée par une extrémité de bande de roulement (Te) et une rainure principale d'épaulement (11) s'étendant le long d'une direction circonférentielle du pneu (C), une rainure transversale d'épaulement (13) qui s'étend de la rainure principale d'épaulement (11) vers un côté extérieur dans une direction de largeur du pneu jusqu'à l'extrémité de bande de roulement (Te) étant fixée dans la région d'épaulement (12) ; et une rangée de blocs d'épaulement (15) configurée en disposant côte à côte dans la direction circonférentielle du pneu (C) un bloc d'épaulement (14) divisé par l'extrémité de bande de roulement (Te), la rainure principale d'épaulement (11) et la rainure transversale d'épaulement (13),
en regardant la rainure transversale d'épaulement (13) dans une section transversale de la direction circonférentielle du pneu,
un angle (θ1) formé par une paroi de rainure (13a) et une ligne verticale (P) tracée à partir d'une position d'extrémité d'ouverture de rainure (20a) jusqu'à une surface de bande de roulement (21a) du bloc d'épaulement (14) étant dans une plage de 10 à 20 degrés, et la paroi de rainure (13a) et le fond de rainure (13c) étant reliés par une surface concave ayant un rayon de courbure (R1) d'au moins 6 mm et n'excédant pas 15 mm,
**caractérisé en ce que**
une dimension dans la direction circonférentielle (a1) par rapport à une surface de bande de roulement (21a) du bloc d'épaulement (14) est d'au moins 2,2 fois et n'excède pas 3,8 fois une profondeur de rainure de la rainure transversale d'épaulement (13).

2. Pneu (1) selon la revendication 1, une largeur de rainure de la rainure transversale d'épaulement (13) étant d'au moins 15 mm et n'excédant pas 30 mm dans une position d'ouverture, et d'au moins 5 mm et n'excédant pas 15 mm dans une position de fond de rainure (13c).

3. Pneu (1) selon la revendication 1 ou 2, la rainure transversale d'épaulement (13) ayant une profondeur de rainure d'au moins 11 mm.

4. Pneu (1) selon l'une quelconque des revendications 1 à 3, la rainure transversale d'épaulement (13) ayant une bosse (22) qui fait partiellement saillie au niveau d'un fond de rainure (13c) vers un côté d'ouverture de rainure.

5. Pneu (1) selon l'une quelconque des revendications 1 à 4, la bande de roulement (4) incluant une région centrale (16) délimitée et formée par la paire de rainures principales d'épaulement (11), une rainure principale centrale (17) qui s'étend le long de la direction circonférentielle du pneu (C) étant fixée dans la région centrale (16) ; et deux rangées de blocs centraux (19a, 19b) configurées en disposant côte à côte dans la direction circonférentielle du pneu (C) une pluralité de blocs centraux (18a, 18b) divisés, en configurant la rainure principale centrale (17) et la paire de rainures principales d'épaulement (11) dans une forme étendue de forme essentiellement en zigzag se connectant l'une à l'autre.
